# EUROPÄISCHE PATENTSCHRIFT

(11) **EP 2 745 683 B1**
(45) Veröffentlichungstag und Bekanntmachung des Hinweises auf die Patenterteilung: **29.07.2015**
(21) Anmeldenummer: 13005262.4
(22) Anmeldetag: 08.11.2013
(51) Int. Cl.: A01K 63/04

(54) **Filtervorrichtung mit Sprüheinrichtung**
Filter device with a spray device
Dispositif de filtration doté d'un système de vaporisation

(30) Priorität: 24.12.2012 DE 202012012352 U
(43) Veröffentlichungstag der Anmeldung: 25.06.2014
(73) Patentinhaber: Rupp, Michael, 75180 Pforzheim (DE)
(72) Erfinder: Rupp, Michael, 75180 Pforzheim (DE)
(74) Vertreter: Wacker, Jost Oliver

(56) Entgegenhaltungen:
- EP-A1- 1 815 901
- DE-A1-102009 015 867
- DE-A1-102010 020 830
- DE-U1-202005 001 395
- DE-U1-202011 003 005

## Beschreibung

Die Erfindung betrifft eine Filtervorrichtung, insbesondere für Fisch- oder Schwimm-Becken/Teiche oder zur Reinigung gewerblicher Abwässer oder industrieller Flüssigkeiten, nach dem Oberbegriff des Anspruchs 1 sowie ein Reinigungsverfahren unter Verwendung einer solchen Filtervorrichtung. Die Filtervorrichtung weist ein Gehäuse, das einen Filterraum umschließt, und ein im Filterraum gehaltenes endloses Filterband auf. Diese kann von dem zu reinigenden Medium aus einem Schmutzwasserbereich in einen Reinwasserbereich hinein durchströmt werden. Ferner ist eine Reinigungsvorrichtung vorgesehen, mittels der am Filterband zurück gehaltene Partikel mittels Sprühstößen wiederkehrend entfernt werden können.

EP 1 815 901 A1 beschreibt einen Trommelfilter, der von einem zu reinigenden Medium entweder von innen oder von außen durchströmt werden kann. Sobald ein vorgegebener Wasserspiegelanstieg infolge der Ausbildung eines Filterkuchens auf dem Trommelfilter anhand eines Schwimmers punktuell festgestellt wird, wird die Filtertrommel von einem Getriebemotor angetrieben und der Filterkuchen mittels einer Reinigungsbürste und/oder einer Sprüheinrichtung von dem Trommelfilter entfernt. Durch die Rotation des Trommelfilters taucht dann der gereinigte Bereich wieder in das zu reinigende Medium ein, das nun wieder leichter durch den gereinigten Abschnitt des Trommelfilters strömen kann, bis der durch den Schwimmer überwachte Wasserspiegel wieder auf den Sollpegel gebracht ist.

Aus DE 10 2009 015 867 A1 ist eine Filteranlage für Fischteiche bekannt, in der die Schmutzpartikel eines zu reinigenden Wassers mittels eines endlosen Filterbandes zurückgehalten werden. Dieses Filterband liegt innerhalb eines Filterraumes an einem antreibbaren Trägerförderband an, mittels dem das Filterband zur Entfernung von zurückgehaltenen Schmutzpartikeln abschnittsweise aus dem Filterraum hinaus in eine Reinigungskammer transportiert werden kann. In dieser Reinigungskammer erfolgt dann die Entfernung der Schmutzpartikel mittels Sprühdüsen.

Nachteilig an den bekannten Filteranlagen ist, dass bei Erreichen eines Refenrenzpegels im Filterraum das Filterband um eine vorgegebene Strecke verfahren wird, die der Länge des Filterbandabschnitts entspricht, der in der Reinigungskammer mit den Sprühdüsen beaufschlagt wird. Hierdurch ist nach jedem derartigen schrittweisen Transport des Filterbandes ein relativ großer Abschnitt des aktiven Filterbereichs durch einen frischen, beziehungsweise frisch gereinigten Abschnitt des Filterbandes gebildet. In diesem weitestgehend unbesetzten Bereich können im Wesentlichen nur die Schmutzpartikel zurückgehalten werden, deren

Haupterstreckung die Porenweite des Filterbandes übertreffen, wobei gleichzeitig das Volumen des zu reinigenden Wassers, das diesen Bereich passiert relativ groß ist. Insgesamt nimmt somit die Qualität der Filtrierung unmittelbar nach jedem dieser schrittweisen Transportvorgänge des Filterbandes deutlich ab.

Aus DE 20 2005 001 395 U1 und DE 20 2011 003 005 U1 sind Filtervorrichtungen bekannt, bei denen das Filterband durch ein Einweg-Filterband gebildet ist, das nach dem Durchlaufen des aktiven Filterbereichs zur Entsorgung auf eine Aufnahmewalze aufgewickelt wird.

DE 10 2010 020 830 A1 zeigt einen Trommelfilter, bei dem sowohl der Antrieb als auch die Reinigung mittels einer Sprühvorrichtung erfolgt.

Die Aufgabe der Erfindung ist es, bei einer gattungsgemäßen Filtervorrichtung die genannten Nachteile zu vermeiden und eine kontinuierlich hohe Qualität der Filtrierung zu gewährleisten.

Diese Aufgabe wird durch eine Filtervorrichtung mit den Merkmalen des Anspruchs 1 gelöst. Dabei ist das Filterband von einer Antriebsvorrichtung antreibbar, an der während einer Überschreitung eines Referenzpegels des Schmutzwasserbereichs kontinuierlich eine Antriebskraft angreift. Mittels dieser Antriebskraft ist dabei zumindest eine pseudokontinuierliche Antriebsbewegung des Filterbandes generierbar. Zudem ist die Antriebsvorrichtung mit einer Steuerungsanordnung verbunden, mittels der die Reinigungsvorrichtung in Abhängigkeit von vorgegebenen Bewegungsintervallen der Antriebsbewegung wiederkehrend aktivierbar ist.

Auf diese Weise wird erreicht, dass während der Überschreitung des Referenzpegels ein pseudokontinuierlicher Transport des Filterbandes erfolgt, in Abhängigkeit von dessen Transportstrecke wiederum die Reinigungsvorrichtung wiederkehrend aktiviert wird. Im Gegensatz zum Stand der Technik wird folglich kein punktuelles Pegelereignis definiert, das einen vorgegebenen schrittweisen Filterbandtransport mit anschließender Reinigung der entsprechenden Tranportstrecke generiert. Vielmehr ist über die gesamte Dauer eines Pegelereignisses hinweg ein zumindest pseudokontinuierlicher Transport des Filterbandes vorgesehen, der bei Beendigung des Pegelereignisses, das heißt bei Erreichen oder Unterschreiten des Referenzpegels ebenfalls beendet wird. Dabei erfolgt nach vorgegebenen Transportintervallen die wiederkehrende Aktivierung der Sprüheinrichtung. Hierbei wird bei jeder Aktivierung der Sprüheinrichtung ein Abschnitt des Filterbandes gereinigt, dessen Flächenerstreckung im Wesentlichen dem jeweils zugeordneten Transportintervall entspricht. Durch diese Vorgehensweise ist gewährleistet, dass das Filterband mit einer an den jeweiligen Verschmutzungsgrad des zu reinigenden Mediums angepassten, weitestgehend kontinuierlichen minimalen Geschwindigkeit transportiert wird. Hierdurch kann sich auf den jeweils in den aktiven Filterbereich hinein beförderten frischen beziehungsweise gereinigten Abschnitten des Filterbandes in kürzester Zeit eine Schicht aus zurückgehaltenen Schmutzpartikeln beziehungsweise ein Filterkuchen ausbilden, wodurch auch sehr kleine Schmutzpartikel zurück gehalten werden können und somit eine sehr hohe Qualität der Filtrierung gewährleistet werden kann.

In einer besonders vorteilhaften Ausführungsform weist die Reinigungsvorrichtung eine Sprüheinrichtung mit wenigstens einer über einen Verlagerungsmechanismus verlagerbaren Sprühdüse zur Beaufschlagung des Filterbandes auf. Hierdurch ist es möglich, während eines Sprühvorganges einen relativ großen Abschnitt des Filterbandes zu reinigen, ohne dass dieses hierfür bewegt werden muss. Auf diese Weise kann das Filterband unabhängig davon, ob ein Sprühvorgang durchgeführt wird oder nicht, durchgehend mit einer minimierten Geschwindigkeit bewegt werden, um dadurch die Schwankungen des hydrostatischen Druckes im Schmutzwasserbereich zu minimieren und den im aktiven Filterbereich ausgebildeten Filterkuchen über der Fläche des aktiven Filterbereiches möglichst vollständig aufrecht zu erhalten. Zudem kann hierdurch mit nur einer Sprühdüse beziehungsweise nur wenigen Sprühdüsen ein relativ großer Abschnitt des Filterbandes während eines Reinigungszyklus gereinigt werden.

Vorteilhafterweise kann der Verlagerungsmechanismus dabei mittels eines Wasserdruckes aktiviert werden, wobei der Wasserdruck über einen Wasseranschluss der Reinigungsvorrichtung erzeugt wird, über den auch die Sprühdüse mit Sprühwasser versorgt werden kann. Auf diese Weise wird für den Verlagerungsmechanismus keine gesonderte Energiequelle und insbesondere kein Stromanschluss benötigt.

Zudem ist es günstig, wenn die Antriebsvorrichtung ein außerhalb des Filterraums angeordnetes Wasserrad aufweist, dessen Schaufeln zur Erzeugung eines Drehmomentes von aus dem Filterraum über einen Überlauf austretendem Medium beaufschlagbar sind. Dabei ist die Steuerungsanordnung in Abhängigkeit von einer Drehbewegung des Wasserrades aktivierbar. Auf diese Weise wir eine Antriebsvorrichtung zur Verfügung gestellt, die auch bei sehr kleinen Zeitabständen zwischen den einzelnen Antriebszyklen eine hohe Langlebigkeit gewährleistet. Zudem ermöglicht ein solches Wasserrad in Verbindung mit dem durch den Überlauf definierten Referenzpegel eine sehr genaue Steuerung sowohl des Filterbandtransportes als auch der Reinigungsvorrichtung in Abhängigkeit des Verhältnisses zwischen dem Volumen des dem Schmutzwasserbereich zuströmenden Mediums und dem Volumen des dem Reinwasserbereich zuströmenden Mediums.

Dabei ist es günstig, wenn die Steuerungsanordnung über ein Getriebe mit dem Wasserrad verbunden ist, mittels dem eine Drehbewegung des Wasserrades auf ein Steuerungselement der Steuerungsanordnung übertragbar ist. Auf diese Weise ist eine exakte, auf die Bewegungsintervalle des Filterbandes abgestimmte Steuerung der Reinigungsvorrichtung möglich.

Vorteilhafterweise ist das Getriebe durch ein Ketten-/Riemengetriebe und das Steuerungselement durch eine Zahn-/Riemenscheibe gebildet, wodurch auch bei größeren Abständen zwischen dem Wasserrad und dem Steuerungselement eine genaue Übertragung der Drehbewegung ermöglicht wird.

Ferner ist es günstig, wenn zwischen dem Verlagerungsmechanismus und der Sprühdüse einerseits und dem Wasseranschluss andererseits eine Ventilvorrichtung angeordnet ist, die mittels des Steuerungselementes von einer Schließstellung in eine Offenstellung verstellbar ist. Auf diese Weise erfolgt die Beaufschlagung des Verlagerungsmechanismus und der Sprühdüse mit dem Wasserdruck über die Ventilvorrichtung, die direkt durch das Steuerungselement umschaltbar ist. Hierdurch ist eine stabile und zeitlich exakte Steuerung der Ventilvorrichtung gewährleistet. Dabei ist es besonders vorteilhaft, wenn die Ventilvorrichtung ein zwischen der Schließstellung und der Offenstellung verstellbares Schaltelement aufweist, das mittels wenigstens eines an der Riemenscheibe mitgeführten Schaltnockens verstellbar ist. Hierdurch ist eine besonders einfache und stabile Betätigung der Ventilvorrichtung über das Schaltelement möglich.

Zudem ist es dabei günstig, wenn der Schaltnocken unter Zwischenlage eines Spannelementes an dem Steuerungselement gehalten ist, das bei Anlage des Schaltnockens an dem Schaltelement vorspannbar ist. Durch die Verwendung eines derartigen Spannelementes kann gewährleistet werden, dass der Schaltnocken nach einem vorgenommenen Schaltvorgang impulsartig weiter bewegt wird, so dass eine Selbsthemmung des Mechanismus ausgeschlossen werden kann. Hierbei ist es ferner vorteilhaft, wenn das Steuerungselement an der Zahn-/Riemenscheibe ein Langloch aufweist, in dem der Schaltnocken bezüglich einer Drehrichtung der Zahn-/Riemenscheibe relativ zu dieser verlagerbar ist, um eine ausreichende relative Bewegungsfreiheit des Schaltnockens gegenüber der von der Antriebsvorrichtung auf die Zahn-/Riemenscheibe übertragenen Drehbewegung sicherzustellen.

Vorteilhafterweise ist das Schaltelement dabei durch eine Selbsthaltung gebildet, mittels der die Ventilvorrichtung entgegen einer Vorspannung in der Schließstellung haltbar ist und die bei Betätigung durch einen der Schaltnocken eine impulsartige Umschaltung der Ventilvorrichtung in die Offenstellung generiert. Hierdurch wird gewährleistet, dass sowohl die Sprühdüsen als auch der Verlagerungsmechanismus im Wesentlichen nur im voll geöffneten Zustand der Ventilvorrichtung und somit mit dem vollen zur Verfügung stehenden Wasserdruck betrieben werden. Auf diese Weise steht insbesondere auch zu Beginn der jeweiligen Reinigungszyklen bereits die maximale Reinigungsleistung der Sprühdüsen zur Verfügung.

In einer weiteren vorteilhaften Ausführungsform weist der Verlagerungsmechanismus ein Schwenklager auf, an dem die Sprüheinrichtung gelagert ist. Zudem weist der Verlagerungsmechanismus einen durch den Wasserdruck aktivierbaren Stellzylinder auf, mittels dem die Sprüheinrichtung um das Schwenklager herum verlagerbar ist. Hierdurch kann auf einfache Weise eine Schwenkbewegung des Verlagerungsmechanismus generiert werden, mittels der eine relativ große Fläche des Filterbandes durch die Sprüheinrichtung beaufschlagt werden kann. Dabei ist es günstig, wenn zusätzlich auch das Schaltelement in Abhängigkeit einer Stellbewegung des Stellzylinders von der Offenstellung in die Schließstellung verstellbar ist, wodurch nach einer Schwenkbewegung der Sprüheinrichtung das Schaltelement wieder in eine der Schließstellung entsprechende Ausgangsstellung verbracht werden kann.

In einer alternativen vorteilhaften Ausführungsform kann ferner der Verlagerungsmechanismus eine durch den Wasserdruck aktivierbare Schiebereinrichtung aufweisen, mittels der die Sprüheinrichtung quer zu einer Transportrichtung des Filterbandes linear verlagerbar ist, wodurch die Reinigung des Filterbandes auch bei großer Breite mit nur einer beziehungsweise mit nur wenigen Sprühdüsen der Reinigungsvorrichtung erfolgen kann.

Ferner ist es günstig, wenn das endlose Filterband durch Umlenkelemente aufgespannt ist, die ausschließlich an einer Innenseite des endlosen Filterbandes anliegen. Auf diese Weise kann bei dem von außen nach innen von Schmutzwasser durchströmten Filterband vermieden werden, dass es in Folge von zwischen dem Filterband und den Umlenkelementen angereicherten Schmutzrückständen zu Störungen bei der Führung des Filterbandes kommt. Zudem ist es vorteilhaft, wenn die Reinigungsvorrichtung als eine modulartige Einheit ausgebildet ist, die als Einheit von der übrigen Filtervorrichtung abnehmbar ist. Hierdurch ist ein einfacher Austausch der Reinigungsvorrichtung wie beispielsweise zu Wartungsoder Reperaturzwecken möglich. Ferner ist es günstig, wenn in einem der Reinigungsvorrichtung bezüglich des Filterbandes gegenüberliegenden Bereich ein Auffangbehälter vorgesehen ist, der eine Abstreifschiene und eine Auslassöffnung aufweist und der herausnehmbar im Gehäuse gehalten ist. Auf diese Weise können die vom Filterband zurück gehaltenen und mittels der Reinigungsvorrichtung vom Filterband entfernten Schmutzpartikel in besonders komfortabler Weise entsorgt werden.

Ferner wird die oben genannten Aufgabe durch ein Reinigungsverfahren, insbesondere unter Verwendung einer Filtervorrichtung in einer der vorangehend beschriebenen Ausführungsformen gelöst, bei dem ein zu reinigendes Medium in einen Schmutzwasserbereich einer Filtervorrichtung eingeleitet wird, von wo es durch ein Filterband hindurch zu einem Reinwasserbereich der Filtervorrichtung strömt, solange ein Schmutzwasserpegel des Schmutzwasserbereichs über einem Reinwasserpegel des Reinwasserbereichs liegt. Dabei hält ein unterhalb des Schmutzwasserpegels liegender Teil des Filterbandes Schmutzpartikel des in den Reinwasserbereich strömenden Mediums wenigstens teilweise zurück. In einem Reinigungsbereich wird das Filterband wiederkehrend mit Sprühstößen beaufschlagt, um die zurück gehaltenen Schmutzpartikel wiederkehrend und möglichst vollständig zu entfernen. Hierbei ist vorgesehen, dass das Filterband von einer Antriebsvorrichtung angetrieben wird, die bei Überschreitung eines Referenzpegels durch den Schmutzwasserpegel aktiviert wird, beispielsweise indem sie kontinuierlich mit einer Antriebskraft beaufschlagt wird, bis der Schmutzwasserpegel wieder unter den Referenzpegel gesunken ist. Zudem wird die Reinigungsvorrichtung in Abhängigkeit von vorgegebenen Bewegungsintervallen einer durch die Antriebskraft erzeugten Antriebsbewegung des Filterbandes aktiviert. Die Reinigungsvorrichtung weist hierbei eine Sprüheinrichtung auf, die bei der Aktivierung gegenüber der übrigen Reinigungsvorrichtung und insbesondere gegenüber dem Filterband in ihrer Position verlagert wird.

Durch die verlagerbare Sprüheinrichtung ist es möglich, das Filterband unabhängig von einer wiederkehrenden Aktivierung der Reinigungsvorrichtung mit einer an den jeweiligen Verschmutzungsgrad des zu reinigenden Mediums angepassten, weitestgehend kontinuierlichen minimalen Geschwindigkeit zu transportieren. Die wiederkehrende Aktivierung der Sprüheinrichtung erfolgt dabei jeweils nach Durchlaufen eines Transportintervalles des Filterbandes, das weitestgehend einem Flächenabschnitt entspricht, der bei einem einzelnen Aktivierungsereignis der Reinigungsvorrichtung von der Sprüheinrichtung beaufschlagt wird. Auf diese Weise kann die Transportgeschwindigkeit des Filterbandes unabhängig von den Aktivierungsereignissen der Reinigungsvorrichtung durchgängig und relativ gleichmäßig auf einem minimierten Niveau gehalten werden. Hierdurch wird wiederum erreicht, dass die Strömungsverhältnisse innerhalb der Filtervorrichtung lediglich geringfügigen Schwankungen unterliegen und der jeweils gerade gereinigte und anschließend in den aktiven Filterbereich eingeführte Teil des Filterbandes relativ schnell wieder mit einem Filterkuchen belegt werden kann, um die Qualität der Filtrierung gegenüber dem unbesetzten Filterband deutlich zu erhöhen. Dies ermöglicht auch die Verwendung eines relativ groben Filtermediums für das Filterband, das beispielsweise eine mittlere Öffnungsweise zwischen 150 und 300 µm aufweist. Hierdurch kann ein kostengünstigeres Material für das Filterband verwendet werden, das zudem einen weniger störungsanfälligen Betrieb der Filtervorrichtung gewährleistet.

In einer bevorzugten Ausgestaltung des Reinungsverfahrens wird die Aktivierung und/oder die Geschwindigkeit der Antriebsvorrichtung referenzniveauabhängig oder zeitabhängig gesteeuert. Hierdurch ist eine relativ einfache Abstimmung der Antriebsvorrichtung auf die Filtrationsleistung des Filterbandes möglich.

Hierbei ist es besonders günstig, wenn das Filterband bei einer einzelenen Aktivierung der Antriebsvorrichtung über eine Transportstrecke transportiert wird und ein bei einer Aktivierung der Reinigungsvorrichtung seitens der Sprüheinrichtung beaufschlagter Abschnitt des Filterbandes in Transportrichtung eine Erstreckung aufweist, die ein Vielfaches eines Maximalwertes dieser Transportstrecke beträgt. Bei einem derartigen Verhältnis der maximalen Transportstrecke eines einzelnen Antriebsereignisses gegenüber der Erstreckung des Filterbandabschnittes, der bei einem einzelnen Reinigungsereignis mittels der Sprüheinrichtung freigesprüht werden kann, wird sichergestellt, dass bei jedem Transport des Filterbandes lediglich ein relativ kleiner unbesetzter beziehungsweise gereinigter Abschnitt des Filterbandes in den aktiven Filterbereich gelangt. Auf diese Weise werden die in den Reinwasserbereich einströmenden Schmutzwassermengen, die lediglich durch den frisch in den aktiven Bereich eingeführten Abschnitt gefiltert sind, auf ein Minimum reduziert, so dass die Abnahme der Reinigungsleistung unmittelbar nach einem Antriebsereignis im Wesentlichen vernachlässigt werden kann. Gleichzeitig setzt sich der frisch in den aktiven Filterbereich eingeführte Abschnitt des Filterbandes aufgrund der geringen Erstreckung relativ schnell wieder mit Schmutzpartikeln zu, so dass durch den sich hierdurch bildenden Filterkuchen auch die Filterleistung des betreffenden Abschnittes relativ schnell wieder erhöht. Hierbei ist es vorteilhaft, wenn die maximale Transportstrecke höchstens ein Zehntel der Erstreckung des bei Aktivierung, der Reinigungsvorrichtung beaufschlagten Abschnittes des Filterbandes in Transportrichtung beträgt. Auf diese Weise können die Schwankungen der Filtrierleistung des Filterbandes unmittelbar vor und nach einem Antriebsereignis auf ein hinsichtlich der gesamten Filtrierleistung tolerierbares Maß begrenzt werden.

In einer alternativen Ausführungsform des Reinigungsverfahrens kann die Antriebsgeschwindigkeit der Antriebsvorrichtung bei Überschreitung des Referenzpegels durch den Schmutzwasserpegel proportional zu einem Maß der Überschreitung des Referenzpegels gesteuert werden. Das heißt, dass mit zunehmendem oder abnehmenden Maß einer Überschreitung des Referenzpegels auch die Antriebsgeschwindigkeit des Filterbandes proportional zu beziehungsweise abnimmt. Auf diese Weise wird die Transportgeschwindigkeit des Filterbandes gemäß dem jeweiligen momentanen Bedarf in Abhängigkeit vom Schmutzwasserpegel beziehungsweise von der Durchströmungsleistung des Filterbandes gesteuert, die wiederum vom Verschmutzungsgrad des zu reinigenden Mediums abhängt.

In einer bevorzugten Ausgestaltung des Reinungsverfahrens wird eine Transportgeschwindigkeit des Filterbandes dabei hydraulisch mittels einer überlaufenden Menge des Mediums aus dem Schmutzwasserbereich erzeugt, wodurch für den Antrieb des Filterbandes und die Steuerung der Sprüheinrichtung keine gesonderte Energieversorgung vorgehalten werden muss und eine Proportionalitätssteuerung besonders einfach umsetzbar ist. Durch die Verwendung eines Wasserades kann hierbei sowohl der Transport des Wasserrades als auch die Aktivierung der Reinigungsvorrichtung zur Optimierung der Filterleistung des Filterbandes in besonders kleinen Zeitabständen wiederkehrend erfolgen, wobei gleichzeitig eine lange Lebensdauer der Antriebsvorrichtung oder der Steuerungsanordnung gewährleistet werden kann.

Alternativ zu der oben genannten Ausführungsform des Reinigungsverfahrens kann das Filterband (8) auch durch einen elektrischen Antriebsmotor (74), wie beispielsweise durch einen bürstenlosen Motor, angetrieben werden, was eine einfache und kostengünstige Herstellung der Filtervorrichtung ermöglicht.

In den Figuren ist eine beispielhafte Ausführungsform der Erfindung dargestellt. Es zeigen:
- Figur 1: eine teilweise geschnittene Ansicht einer erfindungsgemäßen Filtervorrichtung,
- Figur 2: einen Schnitt durch die Filtervorrichtung in Ebene II aus Fig. 1,
- Figur 3: einen Schnitt durch die Reinigungsvorrichtung in Ebene III aus Fig. 2,
- Figur 4: eine vergrößerte Ansicht einer Reinigungsvorrichtung gemäß Fig. 1 und
- Figur 5: eine teilweise geschnittene Ansicht einer alternativen Ausführungsform der erfindungsgemäßen Filtervorrichtung.

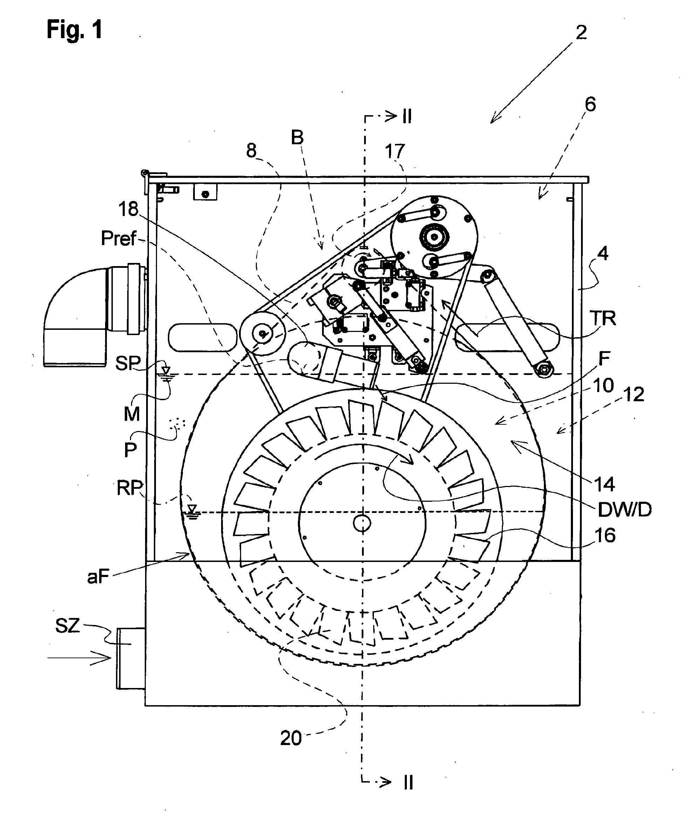

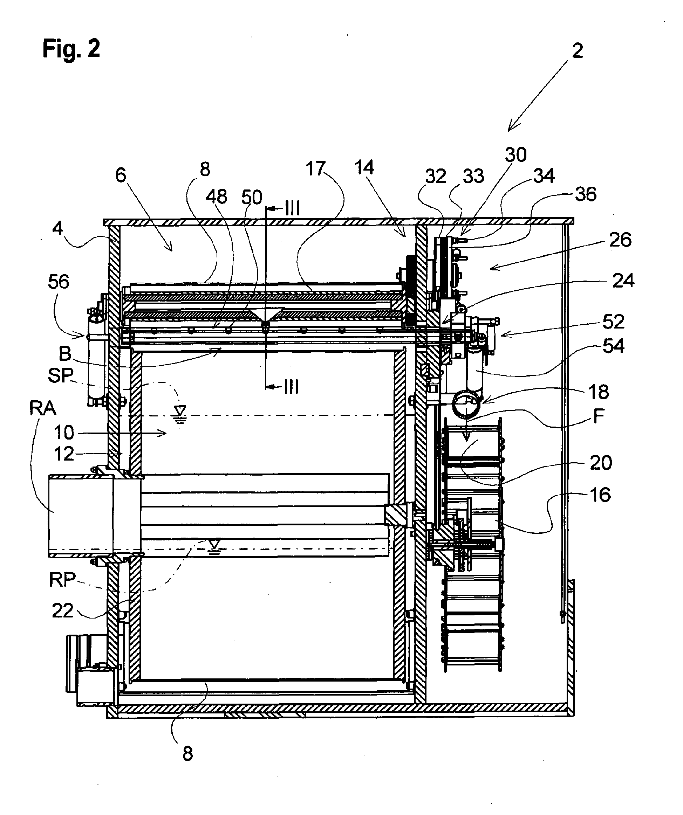

Fig. 1 und 2 zeigen eine Filtervorrichtung 2, die zur Reinigung eines flüssigen Mediums M, wie beispielsweise einem an einem Fisch- oder Schwimm-Becken oder -Teich anfallenden Schmutzwasser dient. Die Filtervorrichtung 2 weist hierzu ein Gehäuse 4 auf, das einen Filterraum 6 umschließt. In dem Filterraum 6 ist ein endloses Filterband 8 aufgespannt, das einen innenliegenden Reinwasserbereich 10 und einen außen liegenden Schmutzwasserbereich 12 des Filterraums 6 definiert. Hierbei ist am Gehäuse 4 ein Schmutzwasserzulauf SZ vorgesehen, über den das zu reinigende Medium M in den Schmutzwasserbereich 12 eingeleitet werden kann.

Das Filterband 8 ist mittels einer Antriebsvorrichtung 14 umlaufend antreibbar, die ein außerhalb des Filterraumes 6 angeordnetes Wasserrad 16 aufweist, mittels dem eine Antriebswalze 17 direkt oder über eine beliebige Drehmomentübertragungseinrichtung angetrieben werden kann.

Die Reinigung des Mediums M über das Filterband 8 erfolgt, solange ein Schmutzwasserpegel SP des Schmutzwasserbereichs 12 über einem Reinwasserpegel RP des Reinwasserbereichs 10 liegt und das Medium M in Folge des höheren hydrostatischen Druckes des Schmutzwasserbereiches 12 durch das Filterband 8 in den Reinwasserbereich 10 strömt. Der unterhalb des Schmutzwasserpegels SP liegende Teil des Filterbandes bildet hierbei einen aktiven Filterbereich aF, in dem die Schmutzpartikel P des in den Reinwasserbereich 10 strömenden Mediums M wenigstens teilweise zurück gehalten werden.

An dem Gehäuse 4 ist ferner ein Überlauf 18 vorgesehen, der einen Referenzpegel Pref bildet. Der Überlauf ist dabei derart oberhalb eines Wasserrades 16 angeordnet, dass das Medium M bei Überschreitung des Referenzpegels Pref, über den Überlauf 18 austritt und dabei Schaufeln 20 des Wasserrades 16 mit einer Antriebskraft F beaufschlagen kann. Die Beaufschlagung mit der Antriebskraft F erfolgt dadurch kontinuierlich solange, bis der Schmutzwasserpegel SP wieder unter den durch den Überlauf 18 gebildeten Referenzpegel Pref abgesunken ist.

Durch die Antriebskraft F des überströmenden Mediums M ist ein Drehmoment D erzeugbar, das das Wasserrad 16 in eine Drehbewegung DW versetzt. Das Wasserrad ist dabei mit der Antriebswalze 17 drehgekoppelt, die zusammen mit einer frei verdrehbar gelagerten Lochtrommel 22 das Filterband 8 aufspannt. Durch die Drehbewegung des Wasserrades 16 werden somit auch die Antriebswalze 17 und die Lochtrommel 22 angetrieben. Auf diese Weise kann das Filterband 8 durch die Drehbewegung der Antriebswalze 17 kontinuierlich entlang einer Transportrichtung TR verlagert werden, solange der Schmutzwasserpegel SP über dem Referenzpegel Pref liegt.

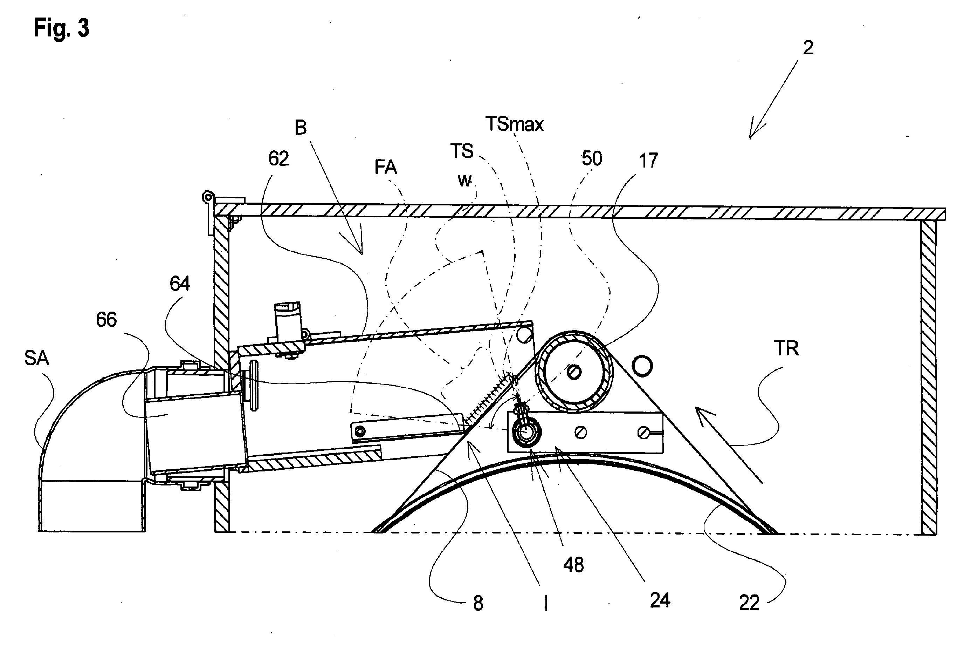

Zwischen der Lochtrommel 22 und der Antriebswalze 17 ist ferner ein Reinigungsbereich B vorgesehen, in dem das Filterband 8 von einer Innenseite mit Sprühstößen einer Reinigungsvorrichtung 24 beaufschlagt werden kann, wie aus Fig. 3 zu entnehmen ist. Die Sprühstöße werden hierbei in Abhängigkeit von vorgegebenen Bewegungsintervallen des Filterbandes 8 abgegeben, um bei dem kontinuierlichen Transport des Filterbandes 8 eine möglichst vollständige Entfernung der im aktiven Filterbereich aF zurück gehaltenen Schmutzpartikel P sicherstellen zu können.

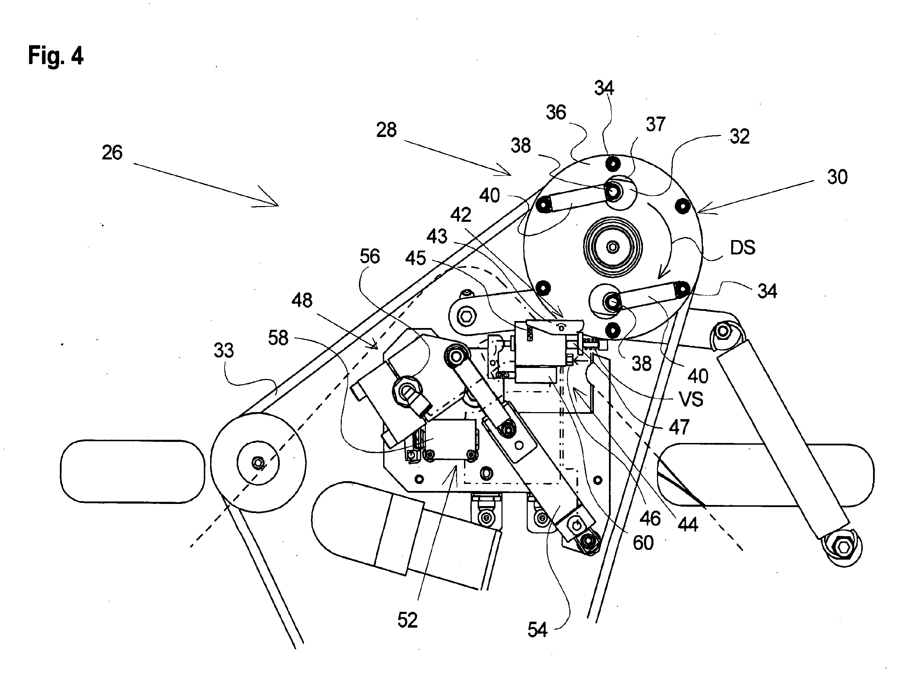

Hierzu ist eine mit der Antriebsvorrichtung 14 verbundene Steuerungsanordnung 26 vorgesehen, mittels der die Reinigungsvorrichtung 24 aktiviert werden kann. Die Steuerungsanordnung 26 weist dabei, wie insbesondere aus Fig. 4 zu entnehmen ist, ein beispielsweise durch ein Ketten- oder Riemengetriebe gebildetes Getriebe 28 auf, das ein Steuerungselement 30 mit einer Zahn- oder Riemenscheibe 32 vorsieht. Dieses Steuerungselement 30 ist über ein Übertragungselement 33, das entsprechend beispielhaft durch eine Kette oder einen Riemen gebildet sein kann, mit dem Wasserrad 16 verbunden, so dass die Drehbewegung DW des Wasserrades 16 in eine Drehbewegung DS der Zahn- oder Riemenscheibe 32 umsetzbar ist.

An dem Steuerungselement 30 sind mehrere Schaltnocken 34 vorgesehen, die zwar bei der Drehbewegung DW der Zahn- oder Riemenscheibe 32 mit bewegt werden, jedoch entgegen einer Federkraft relativ zu der der Zahn- oder Riemenscheibe 32 verlagert werden können, um eine Vorspannung zu erzeugen.

Hierzu sind die Schaltnocken 34 an einer zur Zahn- oder Riemenscheibe 32 koaxialen und verdrehbaren Lagerscheibe 36 gehalten, die wenigstens ein Langloch 37 aufweist, durch das ein an der Zahn- oder Riemenscheibe 32 gehaltener Vorspannnocken 38 hindurch ragt. Dieser ist über ein Federelement 40 mit der Lagerscheibe 36 beziehungsweise einem der Schaltnocken 34 verbunden.

Die Schaltnocken 34 sind, wie aus Fig. 3 zu entnehmen ist, derart auf der Lagerscheibe 36 angeordnet, dass sie in Richtung der Drehbewegung DS mit einem Schaltelement 42 einer Ventilvorrichtung 44 in Anlage kommen können, wenn dieses in einer Schließstellung angeordnet ist. Das Schaltelement 42 ist dabei beispielsweise durch eine Selbsthaltung gebildet, die eine Sperrklinke 43 aufweist, die mittels einer Sperrfeder 45 in die dargestellte Sperrposition vorgespannt wird, in der sie einen Ventilstößel 47 entgegen der Wirkung einer Vorspannfeder VF in der Schließstellung hält.

Die Ventilvorrichtung 44 ist hierbei zwischen einem Wasseranschluss 46 und einer Sprüheinrichtung 48 mit mehreren Sprühdüsen 50 (siehe Fig. 3) sowie einem Verlagerungsmechanismus 52 angeordnet, durch den die Sprühdüsen 50 beispielsweise um ein Schwenklager 56 verschwenkbar sind, um einen größeren Bereich des Filterbandes 8 beaufschlagen zu können.

Die Ventilvorrichtung 44 ist über das als Selbsthaltung ausgeformte Schaltelement 42 mittels der Schaltnocken 34 impulsartig von der dargestellten Schließstellung in eine Offenstellung umschaltbar, bei der der Wasseranschluss 46 sowohl mit der Sprüheinrichtung 48 als auch mit einem Stellzylinder 54 des Verlagerungsmechanismus 52 verbunden wird.

Zudem ist der Wasseranschluss 46 beispielsweise über eine Drossel 58 mit einem Schaltzylinder 60 verbindbar, durch den die Ventilvorrichtung 44, beispielsweise nach Durchlaufen eines vorgegebenen Schwenkwinkels w (siehe Fig. 3) der Sprüheinrichtung 48, wieder in die Schließstellung umgeschaltet werden kann, um den Sprühvorgang zu beenden. Um im Reinigungsbereich B eine möglichst vollständige Entfernung der am Filterband zurückgehaltenen Schmutzpartikel (P) sicherstellen zu können, weist ein bei einem Reinigungsereignis seitens der Sprüheinrichtung 48 beaufschlagte Abschnitt (FA) des Filterbandes (8) in Transportrichtung TR eine Erstreckung auf, die dem vorgegebenen Bewegungsintervalles des Filterbandes 8 entspricht.

Alternativ zu der dargestellten Ausführungsform des Verlagerungsmechanismus 52 mit einem Schwenklager 56 ist es auch denkbar, den Verlagerungsmechanismus 52 mit einer insbesondere wasserdruckbetriebenen Schiebereinrichtung zu versehen, durch die die Sprühdüsen 50 zur Beaufschlagung des Abschnittes (FA) des Filterbandes 8 insbesondere quer zur Transportrichtung TR linear verlagerbar sind (nicht dargestellt).

In jedem Fall ist auf der der Sprüheinrichtung 48 gegenüber liegenden Seite des Filterbandes 8, wie in Fig. 3 dargestellt, in Richtung der durch die Sprühdüsen 50 erzeugbaren Sprühstöße ein Auffangbehälter 62 vorgesehen, in dem die bei einem Sprühvorgang vom Filterband 8 entfernten Schmutzpartikel P aufgefangen werden können. Dieser kann zur Verbesserung der Reinigungswirkung zudem eine an die Außenseite des Filterbandes 8 anlegbare Abstreifschiene 64 aufweisen, mittels der die Schmutzpartikel P zusätzlich vom Filterband 8 abgeschabt werden können. Zudem weist der Auffangbehälter 62 eine Auslassöffnung 66 auf, über die die aufgefangenen Schmutzpartikel P einem Schmutzauslass SA des Gehäuses 4 zugeführt werden können. Dabei ist der Auffangbehälter 62 vorzugsweise derart ausgeführt, dass er bei Bedarf aus dem Gehäuse 4 heraus genommen werden kann.

Alternativ zu der in Fig. 3 dargestellten Ausführungsform wäre es zudem möglich, auf der dem Auffangbehälter 62 gegenüber liegenden Seite einen weiteren Auffangbehälter 62 anzuordnen, auf den weitere Sprühdüsen 50 gerichtet sind (nicht dargestellt), um die Reinigungswirkung weiter zu erhöhen.

Die Funktionsweise der Filtervorrichtung 2 ist in jedem Fall wie folgt:
Über den Schmutzwasserzulauf SZ gelangt das zu reinigende Medium M in den Schmutzwasserbereich 12 des Filterraumes 6 und durchströmt das Filterband 8 hin zum Reinwasserbereich 10, wobei die mitgeführten Schmutzpartikel an der Außenseite des Filterbandes 8 zurückgehalten werden. Das gefilterte Medium M kann hierbei über einen Reinwasserablauf RA (siehe Fig. 2) aus der Filtervorrichtung 2 ausströmen und beispielsweise wieder einem Fischteich oder -becken zugeführt werden.

Durch die zurück gehaltenen Schmutzpartikel P bildet sich an der Außenseite des Filterbandes 8 ein Filterkuchen aus, durch den gegenüber dem unbesetzten Filterband 8 sehr viel kleinere Schmutzpartikel P zurück gehalten werden können. Mit zunehmender Zusetzung des Filterbandes 8 bei fortdauerndem Zustrom des Mediums M über den Schmutzwasserzulauf SZ nimmt die Strömungsleistung im aktiven Filterbereich aF an der Lochtrommel 22 zunehmend ab, wodurch wiederum der Schmutzwasserpegel SP im Schmutzwasserbereich 12 ansteigt. Sobald hierbei der Schmutzwasserpegel SP den Referenzpegel Pref des Überlaufs 18 übersteigt, wird dieser von dem Medium M überströmt und dadurch das Wasserrad 16 von der Antriebskraft F beaufschlagt und in die Drehbewegung DW versetzt, durch die auch die Antriebswalze 17 angetrieben wird. Die Geschwindigkeit der Antriebswalze 17 ist dabei proportional zu dem jeweils überlaufenden Volumenstrom des Mediums M, so dass die Geschwindigkeit der Antriebswalze 17 in Abhängigkeit vom Maß der Überschreitung des Referenzpegels Pref gesteuert wird.

Auf diese Weise wird das mit Schmutzpartikeln P besetzte Filterband 8 in Transportrichtung TR an einem Ende aus dem aktiven Filterbereich aF befördert, während an dem anderen Ende des aktiven Filterbereichs aF frisches beziehungsweise gereinigtes Filterband 8 an die Lochtrommel 22 angelegt wird. Dies erfolgt kontinuierlich bis der Schmutzwasserpegel SP wieder auf den durch den Überlauf 18 definierten Referenzpegel Pref sinkt und dadurch die kontinuierliche Beaufschlagung mit der Antriebskraft F und die daraus resultierende Drehbewegung DW des Wasserrades 16 sowie den Transport des Filterbandes 8 beendet. Auf diese Weise kann sich an dem jeweils relativ kleinen, frisch in den aktiven Filterbereich aF eingeführten Abschnitt des Filterbandes 8 wieder sehr schnell ein neuer Filterkuchen aufbauen. Durch diesen Filterkuchen wird in kürzester Zeit auch an dem jeweils neu in den aktiven Filterbereich aF eingeführten Abschnitt des Filterbandes 8 die Qualität der Filtrierung erhöht.

Neben der Drehmomentübertragung vom Wasserrad 16 auf die Antriebswalze 17 erfolgt hierbei über das Wasserrad 16 gleichzeitig über das Getriebe 28 auch der Antrieb des Steuerungselementes 30. Durch dessen Drehbewegung DS kommt wiederum einer der Schaltnocken 34 in Anlage an dem zunächst in Schließstellung stehenden und als Selbsthaltung ausgeformten Schaltelement 42. Bei Weiterbewegung des Steuerungselementes 30 wird dabei der Schaltnocken 34 innerhalb des Langloches 37 soweit entgegen der Federkraft des Federelementes 40 vorgespannt, bis die Vorspannung ausreicht, um die Sperrklinke 43 entgegen der Kraft der Sperrfeder 45 derart zu verschwenken, dass der Ventilstößel 47 durch die Kraft der Vorspannfeder VF impulsartig in die Offenstellung verschoben wird. Unmittelbar danach wird der Schaltnocken 34 durch die Rückstellkräfte des Federelementes 40 ebenfalls impulsartig am Schaltelement 42 vorbei geführt, um eine Selbsthemmung des Systems zu vermeiden.

Die Umschaltung der Ventilvorrichtung 44 von der Schließstellung in die Offenstellung bewirkt dabei, dass der am Wasseranschluss 46 anstehende Wasserdruck den Stellzylinder 54 beaufschlagt, wodurch dieser die Schwenkbewegung der Sprühdüsen 50 um das Schwenklager 56 herum bewirkt. Gleichzeitig werden dabei auch die Sprühdüsen 50 selbst mit Wasser vom Wasseranschluss 46 versorgt, so dass diese den im Reinigungsbereich B platzierten Abschnitt des Filterbandes 8 von der Innenseite mit einem verschwenkenden Sprühstoße beaufschlagen und dadurch die an der Außenseite anhaftenden Schmutzpartikel P in den Auffangbehälter 42 befördern.

Zusätzlich wird der Wasserdruck des Wasseranschlusses 46 über die Drossel 58 an den Schaltzylinder 60 weiter geleitet, der das Schaltelement 42 nach Durchlaufen des vorgegebenen Schwenkwinkels w der Sprüheinrichtung 48 wieder in die Schließstellung verbringt bis die Sperrklinke 43 nach dem Durchlaufen eines weiteren Bewegungsintervalles vom nächsten Schaltnocken 34 des Steuerungselementes beaufschlagt wird.

Im Falle einer alternativen Ausführungsform mit einem linearen Verlagerungsmechanismus 52 würde die Umschaltung von der Schließstellung in die Offenstellung entsprechend die linerare Verlagerung der Sprühdüsen 50 quer zur Transportrichtung TR bewirken. Nach dem Durchlaufen eines vorgesehenen linearen Bewegungsintervalles würde dann mittels eines entsprechend ausgelegten Schaltzylinders 60 auch hier eine Rückverschiebung der Sprühdüsen 50 in deren Ausgangsstellung vorgenommen werden (nicht dargestellt).

In jedem Fall kann durch den geregelten pseudokontinuierlichen Transport des Filterbandes 8 einerseits und die in Abhängigkeit von den Bewegungsintervallen dieses Transports erfolgende Aktivierung der Sprüheinrichtung 48 über das Steuerungselement 30 andererseits, der hydrostatische Druck im Schmutzwasserbereich 12 bis auf minimale Schwankungen permanent auf Höhe des Referenzpegels Pref gehalten werden. Dabei erfolgt der geregelte Transport mit einer minimalen Geschwindigkeit, so dass im aktiven Filterbereich die Filtrierung nahezu vollständig über einen Filterkuchen vorgenommen wird. Dies gewährleistet wiederum auch bei Schwankungen des Volumenstroms und Verschmutzungsgrades des zu filtrierenden Mediums M eine nahezu gleichbleibend hohe Qualität der Filtrierung durch das Filterband 8.

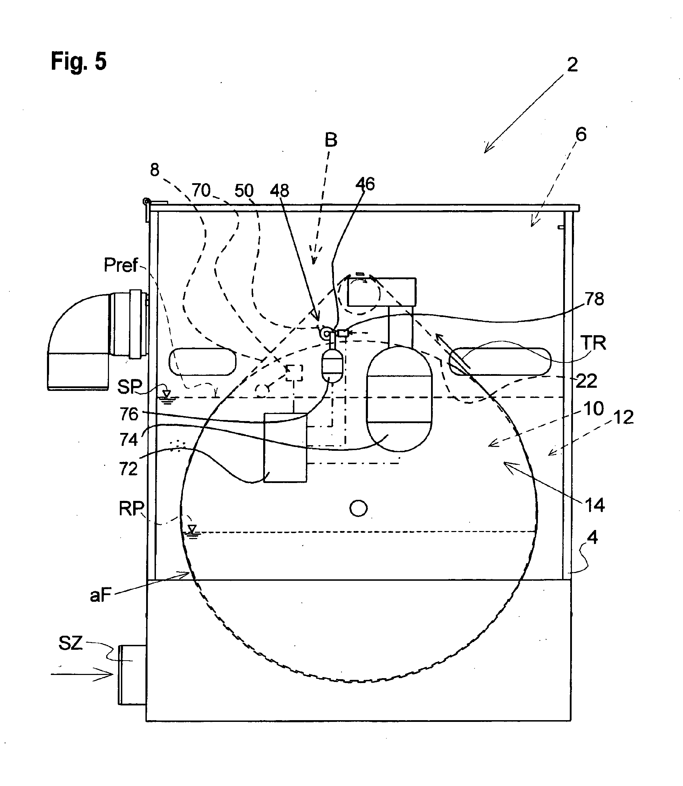

Fig. 5 zeigt eine alternative Ausführungsform der Filtervorrichtung 2 zur Durchführung eines entsprechenden Reinigungsverfahrens. Bei dieser Ausführungsform ist der Referenzpegel Pref durch einen beispielsweise optisch oder mechanisch arbeitenden Füllstandsensor 70 definiert. Sobald der Schmutzwasserpegel SP hierbei im Schmutzwasserbereich 12 den Referenzpegel Pref erreicht, gibt der Füllstandsensor 70 ein entsprechendes Signal an eine beispielsweise elektronische Steuerung 72 ab. Die Steuerung 72 aktiviert daraufhin einen Antriebsmotor 74, der das mit Schmutzpartikeln P besetzte Filterband 8 in Transportrichtung TR ebenfalls an dem einen Ende aus dem aktiven Filterbereich aF befördert, während an dem anderen Ende des aktiven Filterbereichs aF frisches beziehungsweise gereinigtes Filterband 8 an die Lochtrommel 22 angelegt wird.

Die Steuerung der Transportgeschwindigkeit des Filterbandes 8 erfolgt dabei entweder entsprechend der oben beschriebenen hydraulischen Steuerung proportional zum Maß der Überschreitung des Referenzpegels Pref. Alternativ hierzu kann der Antriebsmotor bei Erreichen des Referenzpegels Pref aktiviert und solange mit einer festen Drehzahl betrieben werden, die einer vorbestimmten Transportgeschwindigkeit des Filterbandes entspricht, bis die Unterschreitung des Referenzpegels Pref detektiert und der Antriebsmotor 74 wieder abgeschaltet wird. Alternativ hierzu kann der Antriebsmotor 74 in Abhängigkeit vom Erreichen verschiedener Referenzniveaus im Schmutzwasserbereich 12 mit unterschiedlichen Drehzahlen angetrieben werden, die jeweils einem Referenzniveau zugeordnet sind. In einer weiteren alternativen Ausführungsform könnte der Antriebsmotor beim Erreichen des Referenzpegels Pref auch für eine vorgegebene Zeitspanne aktiviert werden und dabei mit einer vorbestimmten Drehzahl betrieben werden. Sollte nach Ablauf dieser Zeitspanne der Referenzpegel im Schmutzwasserbereich 12 noch nicht wieder unterschritten sein, könnte der Antriebsmotor 74 dann erneut aktiviert werden, wobei für diese Aktivierung die Zeitspanne verlängert und/oder die Drehzahl angehoben werden könnte. Diese zeitabhängige Steuerung kann zudem auch mit der oben beschriebenen referenznieveauabhängigen Steuerung kombiniert werden.

In jedem Fall wird der Antriebsmotor 74 derart angesteuert, dass der frisch in den aktiven Filterbereich aF eingeführte Abschnitt des Filterbandes 8 bei jedem Transportereignis relativ klein ist und sich an diesem somit wieder sehr schnell ein neuer Filterkuchen aufbauen kann. Hierbei ist es beispielsweise vorteilhaft, wenn das Filterband 8 bei jedem Antriebsereignis über eine Transportstrecke TS befördert wird, die eine maximale Transportstrecke TSmax nicht überschreitet, die in jedem Fall lediglich einen Bruchteil, insbesondere nicht mehr als ein Zehntel der Erstreckung des seitens der Sprüheeinrichtung 48 beaufschlagten Abschnittes FA beträgt.

Ferner ist die Steuerung 72 mit einem Stellmotor 76 der Sprüheinrichtung 48 und einem Ventil 78 des Wasseranschlusses 46 verbunden. Hierdurch kann der jeweilige Abschnitt des Filterbandes 8, der aus dem aktiven Filterbereich aF nach und nach in den Reinigungsbereich B transportiert wird, in vorgegebenen Bewegungsintervallen mittels der Sprühdüsen 50 gereinigt werden.

Hierzu kann die Steuerung 72 beispielsweise mit einem Inkrementalgeber verbunden sein (nicht dargestellt), mittels dem wiederkehrend das Durchlaufen einer vorgegebenen Transportstrecke des Filterbandes 8 detektierbar ist. Nach jeder erneuten Vollendung dieser Transportstrecke wird dabei über die Steuerung 72 das Ventil 78 frei gegeben, so dass der hier anstehende Wasserdruck die Sprüheinrichtung 48 beaufschlagen kann. Gleichzeitig aktiviert die Steuerung 72 den Stellmotor 76, der die Sprühdüsen 50 je nach Ausführungsform der Sprüheinrichtung 48 beispielsweise verschwenkt oder linear verschiebt, um den jeweils zu beaufschlagenden Abschnitt FA des Filterbandes 8 vollständig mit dem Wasser zu besprühen.

## Patentansprüche

1. Filtervorrichtung (2), insbesondere für Fisch- oder Schwimm-Becken/Teiche oder zur Reinigung flüssiger gewerblicher oder industrieller Medien (M),
mit einem einen Filterraum (6) umschließenden Gehäuse (4) und einem im Filterraum (6) gehaltenen und von dem zu reinigenden Medium (M) aus einem Schmutzwasserbereich (12) in einen Reinwasserbereich (10) hinein durchströmbaren endlosen Filterband (8) und
einer Reinigungsvorrichtung (24), mittels der am Filterband (8) zurück gehaltene Partikel (P) mittels Sprühstößen wiederkehrend entfernbar sind,
**dadurch gekennzeichnet, dass** das Filterband (8) von einer Antriebsvorrichtung (14) antreibbar ist,
an der bei Überschreitung eines Referenzpegels (Pref) des Schmutzwasserbereichs (12) kontinuierlich eine Antriebskraft (F) angreift, mittels der eine zumindest pseudokontinuierliche Antriebsbewegung des Filterbandes (8) generierbar ist,
wobei die Antriebsvorrichtung (14) mit einer Steuerungsanordnung (26) verbunden ist, mittels der die Reinigungsvorrichtung (24) in Abhängigkeit von vorgegebenen Bewegungsintervallen der Antriebsbewegung wiederkehrend aktivierbar ist.

2. Filtervorrichtung nach Anspruch 1, **dadurch gekennzeichnet, dass** die Reinigungsvorrichtung (24) eine Sprüheinrichtung (48) mit wenigstens einer über einen Verlagerungsmechanismus (52) verlagerbaren Sprühdüse (50) zur Beaufschlagung des Filterbandes (8) aufweist.

3. Filtervorrichtung nach Anspruch 2, **dadurch gekennzeichnet, dass** der Verlagerungsmechanismus (52) mittels eines Wasserdruckes aktivierbar ist, der über einen Wasseranschluss (46) der Reinigungsvorrichtung (24) erzeugbar ist, über den auch die Sprühdüse (50) mit Sprühwasser versorgbar ist.

4. Filtervorrichtung nach einem der Ansprüche 1 bis 3, **dadurch gekennzeichnet, dass** die Antriebsvorrichtung (14) ein außerhalb des Filterraums (6) angeordnetes Wasserrad (16) aufweist, dessen Schaufeln (20) zur Erzeugung eines Drehmomentes (D) von aus dem Filterraum (6) über einen Überlauf (18) austretendem Medium (M) beaufschlagbar ist, wobei die Steuerungsanordnung (26) in Abhängigkeit von einer Drehbewegung (DW) des Wasserrades (16) aktivierbar ist.

5. Filtervorrichtung nach Anspruch 4, **dadurch gekennzeichnet, dass** die Steuerungsanordnung (26) über ein Getriebe (28) mit dem Wasserrad (16) verbunden ist, mittels dem die Drehbewegung (DW) des Wasserrades (16) auf ein Steuerungselement (30) der Steuerungsanordnung (26) übertragbar ist.

6. Filtervorrichtung nach Anspruch 5, **dadurch gekennzeichnet, dass** das Getriebe (28) durch ein Ketten-/Riemengetriebe und das Steuerungselement (30) durch eine Zahn-/Riemenscheibe (32) gebildet ist.

7. Filtervorrichtung nach Anspruch 6, **dadurch gekennzeichnet, dass** zwischen dem Verlagerungsmechanismus (52) und der Sprühdüse (50) einerseits und dem Wasseranschluss (46) andererseits eine Ventilvorrichtung (44) angeordnet ist, die mittels des Steuerungselementes (30) von einer Schließstellung in eine Offenstellung verstellbar ist, wobei die Ventilvorrichtung (44) ein zwischen der Schließstellung und der Offenstellung verstellbares Schaltelement (42) aufweist, das mittels wenigstens eines an der Zahn-/Riemenscheibe (32) mitgeführten Schaltnockens (34) verstellbar ist.

8. Filtervorrichtung nach Anspruch 7, **dadurch gekennzeichnet, dass** der Schaltnocken (34) unter Zwischenlage eines Spannelementes an dem Steuerungselement (30) gehalten ist, das bei Anlage des Schaltnockens (34) an dem Schaltelement (42) vorspannbar ist und das Steuerungselement (30) an der Zahn-/Riemenscheibe (32) ein Langloch (37) aufweist, in dem der Schaltnocken (34) bezüglich einer Drehrichtung (DS) der Zahn-/Riemenscheibe (32) relativ zu dieser verlagerbar ist.

9. Filtervorrichtung nach Anspruch 8, **dadurch gekennzeichnet, dass** das Schaltelement (42) durch eine Selbsthaltung gebildet ist, mittels der die Ventilvorrichtung (44) entgegen einer Vorspannung in der Schließstellung haltbar ist und die bei Betätigung durch einen der Schaltnocken (34) eine impulsartige Umschaltung der Ventilvorrichtung (44) in die Offenstellung generiert.

10. Filtervorrichtung nach einem der Ansprüche 1 bis 9, **dadurch gekennzeichnet, dass** der Verlagerungsmechanismus (52) ein Schwenklager (56), an dem die Sprüheinrichtung (48) gelagert ist, und einen durch den Wasserdruck aktivierbaren Stellzylinder (54) aufweist, mittels dem die Sprüheinrichtung (48) um das Schwenklager (56) herum verlagerbar ist, wobei zusätzlich auch das Schaltelement (42) in Abhängigkeit einer Stellbewegung des Stellzylinders (54) von der Offenstellung in die Schließstellung verstellbar ist.

11. Filtervorrichtung nach einem der Ansprüche 1 bis 10, **dadurch gekennzeichnet, dass** der Verlagerungsmechanismus (52) eine durch den Wasserdruck aktivierbare Schiebereinrichtung aufweist, mittels der die Sprüheinrichtung (48) quer zu einer Transportrichtung (TR) des Filterbandes (8) linear verlagerbar ist.

12. Filtervorrichtung nach einem der Ansprüche 1 bis 11, **dadurch gekennzeichnet, dass** das endlose Filterband (8) durch Umlenkelemente aufgespannt ist, die ausschließlich an einer Innenseite des endlosen Filterbandes (8) anliegen.

13. Reinigungsverfahren,
bei dem ein zu reinigendes Medium (M) in einen Schmutzwasserbereich (12) einer Filtervorrichtug (2) eingeleitet wird, von wo es durch ein Filterband (8) hindurch zu einem Reinwasserbereich (10) der Filtervorrichtung (2) strömt, solange ein Schmutzwasserpegel (SP) des Schmutzwasserbereichs (12) über einem Reinwasserpegel (RP) des Reinwasserbereichs (10) liegt,
wobei ein unterhalb des Schmutzwasserpegels (SP) liegender Teil des Filterbandes (8) Schmutzpartikel (P) des in den Reinwasserbereich (10) strömenden Mediums (M) wenigstens teilweise zurückhält und
das Filterband (8) in einem Reinigungsbereich (B) wiederkehrend mit Sprühstößen beaufschlagt wird, um die zurück gehaltenen Schmutzpartikel (P) möglichst vollständig zu entfernen,
**dadurch gekennzeichnet, dass** das Filterband (8) von einer Antriebsvorrichtung (14) angetrieben wird, die bei Überschreitung eines Referenzpegels (Pref) durch den Schmutzwasserpegel (SP) mit einer Antriebskraft (F) beaufschlagt wird und
die Reinigungsvorrichtung (24) in Abhängigkeit von vorgegebenen Bewegungsintervallen einer Antriebsbewegung des Filterbandes (8) aktiviert wird, wobei eine Sprüheinrichtung (48) der Reinigungsvorrichtung (24) gegenüber dem Filterband (8) verlagert wird.

14. Reinigungsverfahren nach Anspruch 13, **dadurch gekennzeichnet, dass** die Antriebsvorrichtung (14) referenzniveabhängig oder zeitabhängig gesteuert wird.

15. Reinigungsverfahren nach Anspruch 14, **dadurch gekennzeichnet, dass** ein bei einer Aktivierung der Reinigungsvorrichtung (24) seitens der Sprüheinrichtung (48) beaufschlagter Abschnitt (FA) des Filterbandes (8) in Transportrichtung (TR) eine Erstreckung aufweist, die ein Vielfaches einer maximalen Transportstrecke (TSmax) beträgt, über die das Filterband (8) bei einer einzelnen Aktivierung der Antriebsvorrichtung (14) maximal befördert wird.

16. Reinigungsverfahren nach Anspruch 15, **dadurch gekennzeichnet, dass** die maximale Transportstrecke (TSmax) höchstens ein Zehntel der Erstreckung des bei Aktivierung der Reinigungsvorrichtung (24) beaufschlagten Abschnittes (FA) des Filterbandes (8) in Transportrichtung (TR) beträgt.

17. Reinigungsverfahren nach Anspruch 13, **dadurch gekennzeichnet, dass** die Antriebsvorrichtung (14) bei Überschreitung des Referenzpegels (Pref) durch den Schmutzwasserpegel (SP) proportional zu einem Maß der Überschreitung des Referenzpegels (Pref) gesteuert wird.

18. Reinigungsverfahren nach Anspruch 17, **dadurch gekennzeichnet, dass** eine Transportgeschwindigkeit des Filterbandes (8) hydraulisch mittels einer überlaufenden Menge des Mediums aus dem Schmutzwasserbereich (12) gesteuert wird.

19. Reinigungsverfahren nach einem der Ansprüche 13 bis 18, **dadurch gekennzeichnet, dass** das Filterband (8) durch einen elektrischen Antriebsmotor (74) angetrieben wird.

## Claims

1. Filter device (2), in particular for fish tanks or swimming pools, or also for purifying liquid commercial or industrial media (M),
with a housing (4) surrounding a filter chamber (6) and an endless filter strip (8), contained in the filter chamber (6) and through which the medium (M), which is to be purified by it, can flow from a dirty water region (12) into a pure water region (10), and
a purification device (24), by means of which the particles (P) retained at the filter strip (8) can be removed by means of spray jets,
**characterized in that** the filter strip (8) can be driven by a drive device (14),
at which, during the event of a reference level (Pref) of the dirty water region (12) being exceeded, continually applies a drive force (F), by means of which the at least pseudocontinuous drive movement of the filter strip (8) can be generated,
wherein the drive device (14) is connected to a control arrangement (26), by means of which the purification device (24) can be recurrently activated as a function of predetermined movement intervals of the drive movement.

2. Filter device according to claim 1, **characterized in that** the purification device (24) comprises a spray device (48) with at least one spray nozzle (50), displaceable by at least one displacement mechanism (52), for taking effect on the filter strip (8).

3. Filter device according to claim 2, **characterized in that** the displacement mechanism (52) can be activated by means of a water pressure, which can be provided by means of a water connection (46) of the purification device (24), via which the spray nozzle (50) can also be supplied with spray water.

4. Filter device according to one of claims 1 to 3, **characterized in that** the drive device (14) comprises a water wheel (16) arranged outside the filter chamber (6), the blades (20) of which can be subjected to the medium (M) emerging via an overflow (18) from the filter chamber (6) in order to produce a moment of torque (D), wherein the control arrangement device (26) can be activated as a function of a rotational movement (DW) of the water wheel (16).

5. Filter device according to claim 4, **characterized in that** the control arrangement (26) is connected by way of a gear unit (28) to the water wheel (16), by means of which the rotational movement (DW) of the water wheel (16) can be transferred onto a control element (30) of the control arrangement (26).

6. Filter device according to claim 5, **characterized in that** the gear unit (28) is formed by a chain/belt drive, and the control element (30) by a toothed wheel/belt pulley (32).

7. Filter device according to claim 6, **characterized in that**, arranged between the displacement mechanism (52) and the spray nozzle (50) on the one hand, and the water connection (46) on the other is a valve device (44), which can be moved by means of the control element (30) from a closed position into an open position, wherein the valve device (44) comprises an adjustable switching element (42) between the closed position and the open position, which can be adjusted by means of at least one switching cam (34) moved in coupled motion at the toothed wheel/belt pulley (32).

8. Filter device according to claim 7, **characterized in that** the switching cam (34) is retained at the control element (30) with a tensioning element located between them, which, upon the switching cam (34) coming in contact at the switching element (42), can be subjected to preliminary tension, and the control element (30) comprises at the toothed wheel/belt pulley (32) a longitudinal hole (37), in which the switching cam (34) can be displaced relative to the toothed wheel/belt pulley (32) in relation to a direction of rotation (DS) of the toothed wheel/belt pulley (32).

9. Filter device according to claim 8, **characterized in that** the switching element (42) is formed by a latch, by means of which the valve device (44) can be held in the closed position against a preliminary tension and which, on actuation by one of the switching cams (34), generates a pulsed switching of the valve device (44) into the open position.

10. Filter device according to one of claims 1 to 9, **characterized in that** the displacement mechanism (52) comprises a pivot bearing (56), mounted on which is the spray device (48), and an actuating cylinder (54), which can be actuated by the water pressure, by means of which the spray device (48) can be displaced around the pivot bearing (56), wherein, additionally, the switching element (42) can also be moved, as a function of a setting movement of the actuating cylinder (54) from the open position into the closed position.

11. Filter device, according to one of claims 1 to 10, **characterized in that** the displacement mechanism (52) comprises a slide device, by means of which the spray device (48) can be displaced transversely to a transport direction (TR) of the filter strip (8) in linear fashion.

12. Filter device according to one of claims 1 to 11, **characterized in that** the endless filter strip (8) is tensioned by deflection elements, which are in contact exclusively at an inner side of the endless filter strip (8).

13. Purification method,
with which a medium (M) which is to be purified is conducted into a dirty water region (12) of a filter device (2), from where it flows through a filter strip (8) to a clean water region (10) of the filter device (2) for as long as a dirty water level (SP) of the dirty water region (12) lies above a clean water level (RP) of the clean water region (10),
wherein a part of the filter strip (8) lying below the dirty water level (SP) at least partially retains dirt particles (P) of the medium (M) flowing into the clean water region (10), and
the filter strip (8) is recurrently subjected to spray jets in a cleaning region (B), in order to remove as completely as possible the retained dirt particles (P),
**characterized in that** the filter strip (8) is driven by a drive device (14), which, if a reference level (Pref) is exceeded by the dirty water level (SP), is subjected to a drive force (F), and
the purification device (24) is activated as a function of predetermined movement intervals of a drive movement of the filter strip (8), wherein a spray device (48) of the purification device (24) is displaced in relation to the filter strip (8).

14. Cleaning method according to claim 13, **characterized in that** the drive device (14) is controlled as a function of the reference level or as a function of time.

15. Cleaning method according to claim 14, **characterized in that** a section (FA) of the filter strip (8) which, at an activation of the purification device (24), is subjected to the spray device (48), comprises an extension in the transport direction (TR), which amounts to a multiple of a maximum transport stretch (TSmax), over which the filter strip (8) is conveyed as a maximum at one single activation of the drive device (14).

16. Cleaning method according to claim 15, **characterized in that** the maximum transport stretch (TSmax) amounts at the most to one tenth of the extension in the transport direction (TR) of the section (FA) of the filter strip (8) which is subjected [to *the spray device]* at the activation of the purification device (24).

17. Cleaning method according to claim 13, **characterized in that**, in the event of the reference level (Pref) being exceeded by the dirty water level (SP), the drive device (14) is controlled proportionally to a degree of the exceeding of the reference value.

18. Cleaning method according to claim 17, **characterized in that** a transport speed of the filter strip (8) is controlled hydraulically by means of an overflowing quantity of the medium out of the dirty water region (12).

19. Cleaning method according to one of claims 13 to 18, **characterized in that** the filter strip (8) is driven by an electric drive motor (74).

## Revendications

1. Dispositif de filtration (2), en particulier destiné à des bassins/pièces d'eau pour les poissons ou la natation, ou pour purifier des fluides liquides (M) industriels ou artisanaux,
comprenant un boîtier (4) entourant une chambre de filtration (6) et une bande filtrante (8) sans fin maintenue dans la chambre de filtration (6) et pouvant être traversée par le fluide (M) à purifier allant d'une zone d'eau sale (12) à une zone d'eau purifiée (10), et
un dispositif de purification (24), au moyen duquel des particules (P) retenues sur la bande filtrante (8) peuvent être éloignées de manière répétitives par des chocs de pulvérisation,
**caractérisé en ce que** la bande filtrante (8) peut être entraînée par un dispositif d'entraînement (14),
sur lequel en cas de dépassement d'un niveau de référence (Pref) de la zone d'eau sale (12) une force d'entraînement (F) est appliquée continuellement, au moyen de laquelle un mouvement d'entraînement au moins pseudo-continu de la bande filtrante (8) peut être généré,
le dispositif d'entraînement (14) étant relié à un agencement de commande (26), au moyen duquel le dispositif de purification (24) peut être activé de manière répétitive en fonction d'intervalles de mouvement prédéterminé du mouvement d'antraînement.

2. Dispositif de filtration selon la revendication 1, **caractérisé en ce que** le dispositif de purification (24) présente un dispositif de pulvérisation (48) comprenant au moins une buse de pulvérisation (50) déplaçable par un mécanisme de déplacement (52) pour agir sur la bande filtrante (8).

3. Dispositif de filtration selon la revendication 2, **caractérisé en ce que** le mécanisme de déplacement (52) peut être activé au moyen d'une pression d'eau, qui peut être générée par l'intermédiaire d'un raccord d'eau (46) du dispositif de purification (24), par l'intermédiaire duquel la buse de pulvérisation (50) peut aussi être alimentée avec de l'eau de pulvérisation.

4. Dispositif de filtration selon l'une des revendications 1 à 3, **caractérisé en ce que** le dispositif d'entraînement (14) présente une roue hydraulique (16) agencée à l'extérieur de la chambre de filtration (6), roue hydraulique dont les aubes (20) peuvent être alimentées pour la production d'un couple de rotation (D) par du fluide (M) sortant de la chambre de filtration (6) par un trop-plein (18), l'agencement de commande (26) pouvant être activé en fonction du mouvement de rotation (DW) de la roue hydraulique (16).

5. Dispositif de filtration selon la revendication 4, **caractérisé en ce que** l'agencement de commande (26) est relié à la roue hydraulique (16) par une transmission (28), au moyen de laquelle le mouvement de rotation (DW) de la roue hydraulique (16) peut être transmis à un élément de commande (30) de l'agencement de commande (26).

6. Dispositif de filtration selon la revendication 5, **caractérisé en ce que** la transmission (28) est formée par une transmission par chaîne ou courroie et l'élément de commande (30) par une poulie à courroie ou une couronne dentée (32).

7. Dispositif de filtration selon la revendication 6, **caractérisé en ce qu'**un dispositif de soupape (44) est agencé entre le mécanisme de déplacement (52) et la buse de pulvérisation (50) d'une part et le raccord d'eau (46) d'autre part, et peut être réglé au moyen de l'élément de commande (30) d'une position de fermeture à une position d'ouverture, le dispositif de soupape (44) présentant un élément de commutation (42) réglable entre la position de fermeture et la position d'ouverture, l'élément de commutation pouvant être déplacé au moyen d'au moins une came de commutation (34) conduite par la poulie à courroie ou la couronne dentée (32).

8. Dispositif de filtration selon la revendication 7, **caractérisé en ce que** la came de commutation (34) est maintenue sur l'élément de commande (30) avec l'interposition d'un élément de contrainte, qui est précontraint lors de l'appui de la came de commutation (34) sur l'élément de commutation (42), et l'élément de commande (30) présente sur la poulie à courroie ou la couronne dentée (32), un trou oblong (37) dans lequel la came de commutation (34) peut être déplacée par rapport à la poulie à courroie ou la couronne dentée (32), relativement à une direction de rotation (DS) de celle-ci.

9. Dispositif de filtration selon la revendication 8, **caractérisé en ce que** l'élément de commutation (42) est formé par un auto-maintien, au moyen duquel le dispositif de soupape (44) peut être maintenu dans une position de fermeture à l'encontre d'une précontrainte, et qui, lorsqu'il est actionné par l'une des cames de commutation (34), génère un basculement impulsionnel du dispositif de soupape (44) dans la position ouverte.

10. Dispositif de filtration selon l'une des revendications 1 à 9, **caractérisé en ce que** le mécanisme de déplacement (52) comprend un palier de pivotement (56) sur lequel le dispositif de pulvérisation (48) est monté, et un vérin de positionnement (54) activable par la pression de l'eau, au moyen duquel le dispositif de pulvérisation (48) peut être déplacé autour du palier de pivotement (56), l'élément de commutation (42) pouvant en outre également être déplacé en fonction d'un mouvement de positionnement du vérin de positionnement (54) de la position ouverte à la position fermée.

11. Dispositif de filtration selon l'une des revendications 1 à 10, **caractérisé en ce que** le mécanisme de déplacement (52) présente un dispositif coulissant activable par la pression de l'eau, au moyen duquel le dispositif de pulvérisation (48) peut être déplacé linéairement transversalement à la direction de transport (TR) de la bande filtrante (8).

12. Dispositif de filtration selon l'une des revendications 1 à 11, **caractérisé en ce que** la bande filtrante (8) sans fin est tendue par des éléments de renvoi, qui portent uniquement sur un côté intérieur de la bande filtrante (8) sans fin.

13. Procédé de purification,
dans lequel un fluide (M) à purifier est introduit dans une zone d'eau sale (12) d'un dispositif de filtration (2), d'où il s'écoule à travers une bande filtrante (8) en direction d'une zone d'eau purifiée (10) du dispositif de filtration (2), aussi longtemps qu'un niveau d'eau sale (SP) de la zone d'eau sale (12) se situe au-dessus d'un niveau d'eau propre (P) de la zone d'eau propre (10),
dans lequel une partie de la bande filtrante (8) se situant sous le niveau d'eau sale (SP) retient au moins en partie les particules d'impuretés (P) du fluide (M) passant dans la zone d'eau purifiée (10) et
la bande filtrante (8) est alimentée avec des pulvérisations de manière répétitive dans une zone de purification (B) pour enlever aussi complètement que possible les particules retenues,
**caractérisé en ce que** la bande filtrante (8) est entraînée par un dispositif d'entraînement (14) sur lequel agit une force d'entraînement (F) lorsque le niveau d'eau sale (SP) dépasse un niveau de référence (Pref),
le dispositif de purification (24) est activé en fonction d'intervalles de mouvement prédéterminés d'un mouvement d'entraînement de la bande filtrante (8), un dispositif de pulvérisation (48) du dispositif de nettoyage (24) étant monté en face de la bande filtrante (8).

14. Procédé de purification selon la revendication 13, **caractérisé en ce que** le dispositif d'entraînement (14) est commandé en fonction du temps ou en fonction d'un niveau de référence.

15. Procédé de purification selon la revendication 14, **caractérisé en ce qu'**une section (FA) de la bande filtrante (8) subissant l'action du dispositif de pulvérisation (48) lors de l'activation du dispositif de nettoyage (24) présente dans la direction de transport (TR), une étendue qui est un multiple d'une course maximale (TSmax), dont la bande filtrante est au maximum avancée lors d'une seule activation du dispositif d'entraînement (14).

16. Procédé de purification selon la revendication 15, **caractérisé en ce que** relativement à la direction de transport (TR) la course maximale (TSmax) est au plus d'un dixième de l'étendue de la section (FA) de la bande filtrante (8) qui subit l'action lors de l'activation du dispositif de purification (24).

17. Procédé de purification selon la revendication 13, **caractérisé en ce que** le dispositif d'entraînement (14) est commandé lors du dépassement du niveau de référence (Pref) par rapport au niveau d'eau sale (SP), proportionnellement à une mesure du dépassement du niveau de référence (Pref).

18. Procédé de purification selon la revendication 17, **caractérisé en ce qu'**une vitesse de transport de la bande filtrante (8) est commandée hydrauliquement au moyen d'une quantité du fluide qui déborde de la zone d'eau sale (12).

19. Procédé de purification selon l'une des revendications 13 à 18, **caractérisé en ce que** la bande filtrante (8) est entraînée par un moteur électrique d'entraînement (74).
